# EUROPÄISCHE PATENTSCHRIFT

(11) **EP 1 121 539 B1**
(45) Veröffentlichungstag und Bekanntmachung des Hinweises auf die Patenterteilung: **02.05.2003**
(21) Anmeldenummer: 99970450.5
(22) Anmeldetag: 06.10.1999
(51) Int. Cl.: F16D 3/74

(54) **ELASTISCHE WELLENKUPPLUNG MIT TORSIONSELEMENT**
ELASTIC SHAFT COUPLING HAVING A TORSION ELEMENT
ACCOUPLEMENT D'ARBRE ELASTIQUE A ELEMENT DE TORSION

(30) Priorität: 12.10.1998 DE 19846873
(43) Veröffentlichungstag der Anmeldung: 08.08.2001
(73) Patentinhaber: Hackforth GmbH & Co. KG, 44653 Herne (DE)
(72) Erfinder: WALTER, Jürgen, D-45721 Haltern (DE); FALZ, Ulrich, D-44267 Dortmund (DE)
(74) Vertreter: Behrendt, Arne, Dipl.-Ing.
(86) Internationale Anmeldenummer: EP9907447
(87) Internationale Veröffentlichungsnummer: WO00022313

(56) Entgegenhaltungen:
- DE-A- 4 305 625
- DE-A- 19 808 035
- DE-B- 1 096 692
- DE-C- 4 109 622
- GB-A- 2 136 922
- GB-A- 2 202 924

## Beschreibung

Die vorliegende Erfindung betrifft eine elastische Wellenkupplung mit mindestens einem Torsionselement, welches als Übertragungselement mindestens einen Elastomerkörper aufweist, an dem an- und abtriebsseitig axiale metallische Anschlußflansche fest angebracht, insbesondere anvulkanisiert sind.

Bei derartigen Wellenkupplungen mit Torsionselementen erfolgt die Drehmomentübertragung ausschließlich über einen oder mehrere Elastomerkörper, in der Regel hochwertige Kupplungs-Gummikörper. Zur Einleitung der Momente in den bzw. die Gummikörper sind auf deren axialen Stirnseiten scheibenförmige metallische Anschlußflansche unlösbar angebracht. Die derzeit beste Verbindung erhält man durch Anvulkanisieren.

Unter dynamischer Last, d. h. bei Übertragung zeitlich veränderlicher Drehmomente, wie sie beispielsweise durch Drehmomentspitzen bei schwungmassenarmen Großdieselmotoren vorliegen, erfahren die Übertragungselemente eine gleichfalls zeitlich veränderliche Tordierung. Durch diese dynamische Belastung fällt infolge innerer Reibung bei der Verformung des Elastomerkörpers Verlustwärme an. Da die Belastbarkeit selbst der leistungsfähigsten Elastomerwerkstoffe mit ansteigender Temperatur abnimmt, werden effiziente Maßnahmen zur Kühlung, d. h. zur Wärmeabfuhr aus dem Gummikörper angewandt.

Zur Kühlung der Kernbereiche der Gummikörper, die wegen der grundsätzlich relativ geringen spezifischen Wärmeleitfähigkeit von Elastomerwerkstoffen besondere Aufmerksamkeit erfordern, ist es bereits seit langem bekannt, anstelle eines ringförmig durchgehenden Elastomer-Übertragungselements mehrere segmentförmige Torsionselemente einzusetzen, die Anschlußflansch-Segmente aufweisen. Eine derartige Ausführung geht beispielsweise aus der DE 37 10 390 C2 hervor.

Aus der vorgenannten DE 37 10 390 C2 ist ebenfalls bereits bekannt, sowohl einstückig-ringförmige als auch segmentförmige Torsionselemente mit axial durch die Anschlußflansche durchgehenden Durchbrechungen und den Elastomerkörper mit axialen Belüftungskanälen zu versehen.

Die Kühlluft, welche zwischen die Segmente bzw. durch die Durchbrechungen in den Anschlußflanschen einströmt, sorgt in vorteilhafter Weise für eine effektive Luftkühlung der Gummikörper, so daß die Leistungsdichte derartiger Torsionselemente erheblich gesteigert werden konnte. Dies führt allerdings zwangsläufig zu einer besonders hohen Beanspruchung der Elastomer-Metall-Verbindungsfläche, d. h. der aktiven Vulkanisationsfläche des Gummikörpers am Anschlußflansch. Besonders gefährdet bezüglich Rißbildung im Gummi bzw. Einreißen der Elastomer-Metall-Verbindung sind die Ränder der Verbindungsfläche an den radialen Außenkanten von Anschlußflansch-Segmenten bzw. an den Innenkanten von Durchbrechungen, d. h. von Belüftungsöffnungen in den Anschlußflanschen.

Zur Unterbindung von Rißbildung und Ablösung an den Rändern bzw. Kanten der Gummi-Metall-Verbindungsfläche ist bereits in der AT 154 034 vorgeschlagen worden, die Kanten abzurunden und den Gummikörper die Stirnseiten der Kanten umgreifend zu gestalten. Eine Weiterbildung dieser Grundidee wird in der DE 33 10 695 C2 angegeben. Diese bezieht sich auf Torsionselemente, bei denen die radialen Stirnkanten der Anschlußflansch-Segmente mit einer abgerundeten Profilierung versehen sind, um die der Gummikörper herumgezogen ist.

Die vorangehend erläuterten Maßnahmen nach dem Stand der Technik haben den Vorteil, daß die Haftung des Gummikörpers am Rand der Gummi-Metall-Verbindungsfläche verbessert wird. Ein weiterer positiver Effekt ist, daß die axiale Breite des Gummikörpers in diesen Randbereichen und damit die aktive elastische Länge vergrößert wird. Bei den immer höheren geforderten Leistungsdichten stößt man jedoch mittlerweile an die Grenzen der vorangehend beschriebenen Maßnahmen. Unter Maximallast zeigt sich nämlich, daß trotz der bogenförmigen Profilierung der Kanten Biegebeanspruchungen auf den herausgeführten Bereich des Gummikörpers ausgeübt werden. Außerdem läßt sich die aktive elastische Länge im Bereich der radialen Stimflächen der Segmente bzw. im Querschnitt der Anschlußflansch-Durchbrechungen lediglich um die axiale Materialstärke der Anschlußflansche erhöhen. Dadurch werden Grenzbelastungen definiert, die bislang nicht überschritten werden können.

Das der vorliegenden Erfindung zugrundeliegende Problem liegt nun darin, Torsionselemente der eingangs genannten Art dahingehend weiterzubilden, daß höhere übertragbare Leistungsdichten möglich werden. Die Optimierung soll dabei insbesondere die besondere Beanspruchung im Bereich der Stirnflächen von Anschlußflansch-Segmenten und den Kanten von Durchbrechungen der Anschlußflansche berücksichtigen.

Zur Lösung dieses Problems schlägt die Erfindung vor, daß die Anschlußflansche zumindest an den radial verlaufenden Rändern der Verbindungsfläche zwischen Elastomerkörper und Anschlußflanschen, die an den Außenkanten von Anschlußflansch-Segmenten und/oder an den Innenkanten von Durchbrechungen im Anschlußflansch gebildet werden, axial nach außen bezüglich des Elastomerkörpers aus der Anschlußflansch-Ebene bogenförmig ausgestellt sind, und der Elastomerkörper dem ausgestellten Bereich folgend anvulkanisiert ist.

Erfindungsgemäß sind die Anschlußflansche dort, wo die freien Ränder der Gummi-Metall-Verbindungsfläche radial verlaufen und damit besonderen Belastungen ausgesetzt sind, axial nach außen aufgebogen gestaltet. Dies gilt insbesondere für die Innenkanten von Durchbrechungen, d. h. von Lüftungsöffnungen im Anschlußflansch, beziehungsweise - bei segmentierten Anschlußflanschen - für die radialen Außenkanten der Anschlußflansch-Segmente. Durch die erfindungsgemäß nach außen ausgestellten Randbereiche erfolgt eine Verbreiterung der Vulkanisationsfläche zwischen Gummi und Metall in axialer Richtung über die axiale Breite des Anschlußflansches hinaus.

Zur praktischen Umsetzung der erfindungsgemäßen Ausgestaltung ist es gleichermaßen möglich, die plattenförmigen Anschlußflansche entlang der Ränder axial nach außen aufzubiegen, oder alternativ entlang der Ränder einen axial nach außen vorstehenden Wulst anzuformen. Die letztgenannte Ausführung ist insbesondere in Anbetracht der Herstellung von Anschlußflanschen bzw. Anschlußflansch-Segmenten aus Stahlguß vorteilhaft.

Ein wesentlicher Vorteil der Erfindung liegt darin, daß die Haftfläche, d. h. die Vulkanisierungsfläche im Kantenbereich unabhängig von der Materialstärke der Anschlußflansche in axialer Richtung vergrößert wird. Damit wird zum einen der Krafthalt des Gummikörpers am Anschlußflansch absolut vergrößert. Zum anderen wird die Biegebeanspruchung durch den größeren Biegeradius der ausgestellten bzw. aufgebogenen Ränder gegenüber den relativ schmalen Kantenbereichen im Stand der Technik erheblich verringert, wodurch die Krafteinleitung in den Gummikörper optimiert wird.

Eine weitere vorteilhafte Wirkung der Erfindung ist, daß die aktive elastische Länge des Gummikörpers zwischen den erfindungsgemäß ausgestellten Randbereichen der Anschlußflansche stärker vergrößert wird, als dies im Stand der Technik prinzipiell möglich wäre. Dort ist nämlich theoretisch lediglich eine entsprechende Verbreiterung des Gummikörpers um die axiale Materialstärke der Anschlußflansche möglich, wogegen bei der Erfindung diese Begrenzung überwunden wird. Die Kanten der ausgestellten Randbereiche können nämlich ohne weiteres um ein Mehrfaches davon nach außen aufgebogen sein, wodurch sich natürlich eine entsprechende Verbreiterung des Gummikörpers in diesem Bereich ergibt. Dies bedeutet eine Verringerung der auftretenden maximalen Spannungswerte im Betrieb. Im Zusammenwirken mit der erfndungsgemäß - wie vorangehend erläutert - vergrößerten Haftfläche ist eine erhebliche Steigerung der Leistungsdichte erreichbar.

Die erfindungsgemäße Ausgestaltung ist gleichfalls auf die Gestaltung der radialen Ränder von Anschlußflansch-Segmenten sowie innerhalb der Anschlußflansche angeordneter Durchbrechungen umsetzbar. Bei den Durchbrechungen ist dies unabhängig davon, ob sie mit Gummimaterial gefüllt sind oder sich Belüftungskanäle im Gummikörper anschließen.

In einer bevorzugten Ausführungsform der Erfindung weist das Torsionselement axial durch die Anschlußflansche und den Elastomerkörper durchgehende Lüftungsöffnungen auf. Durch die axialen Lüftungskanäle, die sich an die axialen Durchbrechungen im Anschlußflansch anschließen, wird das Innere des Elastomerkörpers effektiv luftgekühlt. Dadurch, daß die Lüftungsöffnungen innerhalb von erfindungsgemäß ausgestalteten Durchbrechungen mit ausgestellten bzw. aufgebördelten Rändern angeordnet sind, wird auch in den dort vorliegenden Randbereichen der Gummi-Metall-Verbindung eine verbesserte Haftung erreicht.

Eine vorteilhafte Weiterbildung der Erfindung sieht vor, daß der Elastomerkörper radiale Lüftungskanäle aufweist. Dies eröffnet überdies die Möglichkeit, die radialen Lüftungskanäle mit den vorgenannten axialen Lüftungsöffnungen zu verbinden. Dadurch sind die Torsionselemente in sich nach Art eines Radialverdichters aufgebaut. Bei Rotation wird aufgrund der auftretenden Fliehkräfte Umgebungsluft über die axialen Öffnungen angesaugt und durch die radialen Lüftungskanäle über den Umfang der Elastomerelemente nach außen abgegeben. Durch den stetigen Luftstrom ergibt sich eine besonders effektive Kühlung.

Zweckmäßigerweise sind die radialen Lüftungskanäle radial nach außen offen. Das bedeutet, daß sie radial nach innen geschlossen sein können. Es bleibt damit innen zur Momentübertragung aktives Gummimaterial stehen.

Bei Ausführungsformen, die radiale Lüftungsöffnungen aufweisen, ist es besonders vorteilhaft, daß die Anschlußflansche im Umfangsbereich zwischen diesen radialen Lüftungsöffnungen Durchbrechungen aufweisen. Diese Durchbrechungen gehen nicht in Lüftungskanäle über, sondern sind mit Gummimaterial ausgefüllt. Aufgrund der erfindungsgemäßen Ausgestaltung mit den axial nach außen ausgestellten Randbereichen wird im Bereich der Durchbrechungen zum einen die aktive elastische Länge vergrößert und zum anderen zusätzliche Haftung und Stabilität des Gummikörpers zwischen den radialen Lüftungskanälen zur Verfügung gestellt.

Ausführungsbeispiele der Erfindung sind im folgenden anhand der Zeichnungen näher erläutert. Es zeigen hierzu im einzelnen:
- Fig. 1:: eine axiale Ansicht auf ein Torsionselement-Segment gemäß der Erfindung;
- Fig. 2:: einen radialen Schnitt C-D gemäß Fig. 1;
- Fig. 3:: einen radialen Halbschnitt C-A gemäß Fig. 1;
- Fig. 4:: eine teilweise Ansicht auf einen Schnitt in Umfangsrichtung gemäß Fig. 1 im Bezugsradius R;
- Fig. 5:: einen axialen Schnitt durch das Torsionselement-Segment gemäß Fig. 1;
- Fig. 6:: eine radiale Teilansicht von außen.

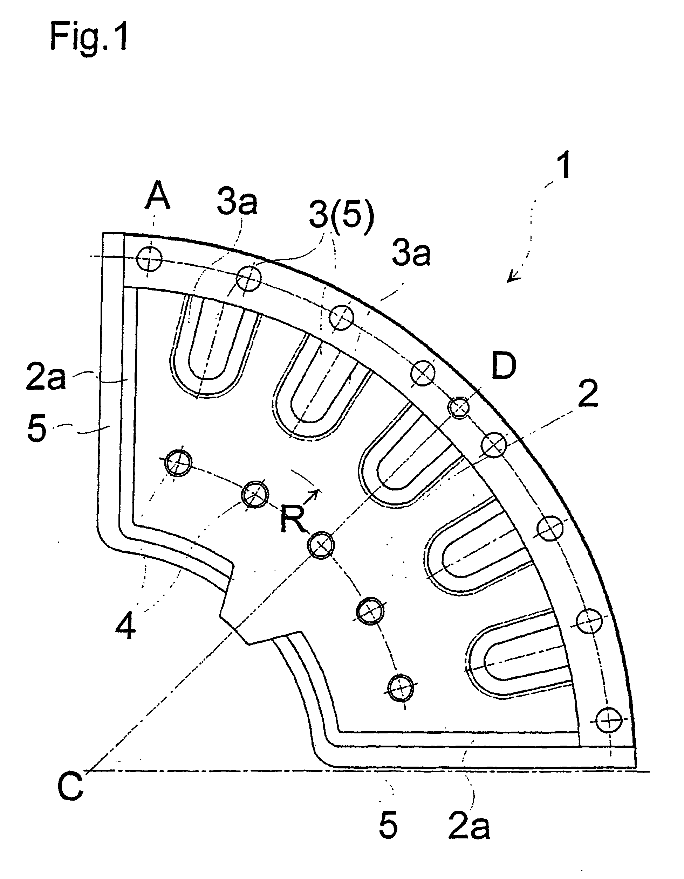

Fig. 1 zeigt eine axiale Ansicht auf ein erfindungsgemäßes, segmentförmiges Torsionselement, welches darin mit dem Bezugszeichen 1 versehen ist. Diese Ansicht zeigt im wesentlichen eine axiale Draufsicht auf eines der beiden axial aufeinanderfolgenden, gleichartig aufgebauten viertelkreis-förmigen Anschlußflansch-Segmente 2.

Bei einer vollständigen Wellenkupplung sind insgesamt vier der dargestellten Torsionselemente 1 so zusammengesetzt, daß die kreisförmig angeordneten Anschlußflansch-Segmente 2 einen insgesamt kreisringförmigen Anschlußflansch bilden. Zwischen den radialen Rändern der Anschlußflansch-Segmente 2 sind die an- und abtriebsseitigen Anschlußflansche infolgedessen insgesamt jeweils vierfach durchbrochen.

In den radialen Randbereichen 2a der Anschlußflansch-Segmente 2 ist der Anschlußflansch 2 erfindungsgemäß nach außen, also hier in Richtung des Betrachters, ausgestellt, d. h. längs dem radialen Randbereich 2a aufgebogen bzw. aufgebördelt.

Das Anschlußflansch-Segment 2 weist weiterhin insgesamt fünf über den Umfang verteilte, im Umriß etwa U-förmige, axial durchgehende Durchbrechungen 3 auf. Diese sind entlang ihrer Ränder 3a ebenfalls in Richtung auf den Betrachter aufgebogen bzw. aufgebördelt, wie die bereits erwähnten Randbereiche 2a.

Auf einem innenliegenden Teilkreis befinden sich kreisrunde, axial durchgehende Lüftungsöffnungen 4. Diese können ebenfalls mit erfindungsgemäß ausgestellten Randbereichen versehen sein, was in der dargestellten Ausführung jedoch nicht umgesetzt ist.

Mit dem Bezugszeichen 5 ist ein als Übertragungselement dienender Gummikörper versehen, der zwischen den axial aufeinanderfolgenden Anschlußflansch-Segmenten 2 an diesen anvulkanisiert ist. Dieser Gummikörper 5 ist ebenfalls segmentförmig und wird in dieser Darstellung größtenteils vom Anschlußflansch-Segment 2 verdeckt. Lediglich in dem über die Randbereiche 2a herumgezogenen Bereichen ist der Gummikörper 5 sichtbar, sowie durch die Durchbrechungen 3, was mit dem in Klammern gesetzten Bezugszeichen (5) angedeutet ist. Die Lüftungsöffnungen 4 gehen durch den Gummikörper 5 ebenfalls axial durch.

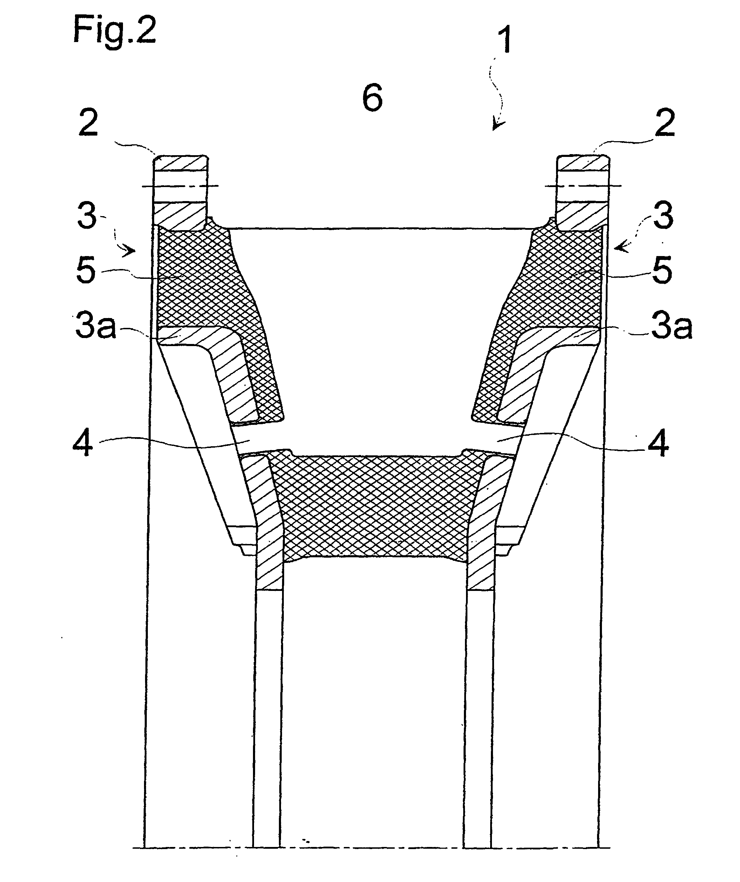

Fig. 2 zeigt einen Radialschnitt C-D durch das Torsionselement 1 gemäß Fig. 1. Für identische Bestandteile finden dabei dieselben Bezugszeichen Verwendung.

in Fig. 2 ist besonders deutlich erkennbar, wie die Ränder 3a der Durchbrechungen 3 nach außen ausgestellt bzw. aufgebogen sind. Der Gummikörper 5, welcher die Durchbrechungen 3 ausfüllt, folgt dem nach außen ausgestellten Bereich und ist dort ebenfalls fest am Anschlußflansch-Segment 2 anvulkansiert.

Aus dieser Darstellung ist ebenfalls erkennbar, daß die Lüftungsöffnungen 4 in radiale Lüftungskanäle 6 in dem Gummikörper 5 münden, die lediglich nach außen zum Umfang hin offen sind und nach innen geschlossen sind.

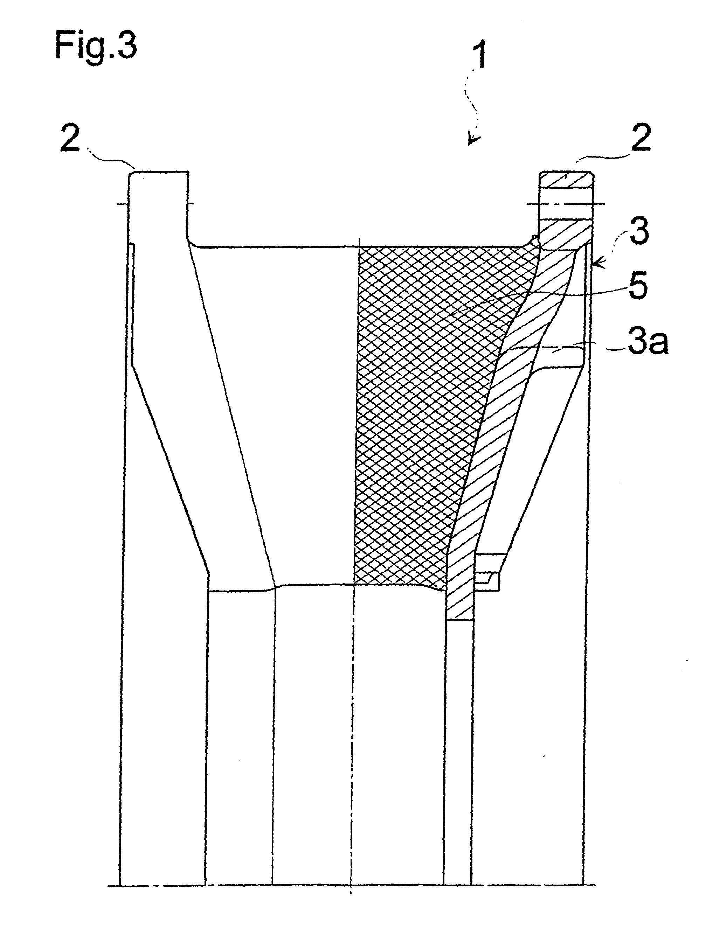

Fig. 3 zeigt einen Halbschnitt in derselben Darstellung wie Fig. 2, der allerdings in den Umfangsbereich zwischen den Durchbrechungen 3 liegt. In dieser Darstellung sind ebenfalls ansatzweise die kragenartig nach außen ausgestellten Ränder 3a sichtbar.

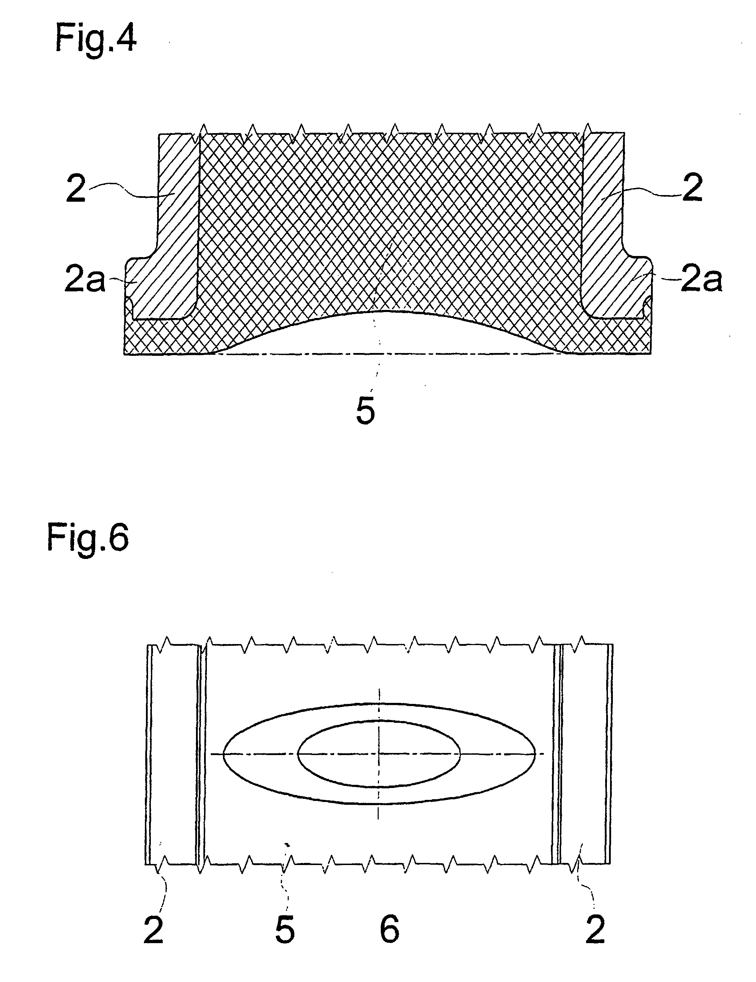

Fig. 4 zeigt eine Teilansicht eines Schnitts in Umfangsrichtung im Bezugsradius R durch die radialen Randbereiche 2a des Anschlußflansch-Segments 2. Daraus geht besonders deutlich hervor, wie das Anschlußflansch-Segment 2 im Randbereich 2a aus der Anschlußflansch-Ebene axial nach außen ausgestellt bzw. aufgebogen ist. Der Gummikörper 5 umgreift diese Randbereiche 2a in Umfangsrichtung. Die aufgebogenen Bereiche 2a könnte man hier auch als wulstartige Anformungen bezeichnen.

Aus Fig. 4 wird deutlich, daß verglichen mit dem inneren Bereich, der zwischen den Innenseiten der Anschlußflansch-Segmente 2 liegt, die wirksame elastische Länge des Gummikörpers 5 in den Randbereichen 2a deutlich vergrößert ist.

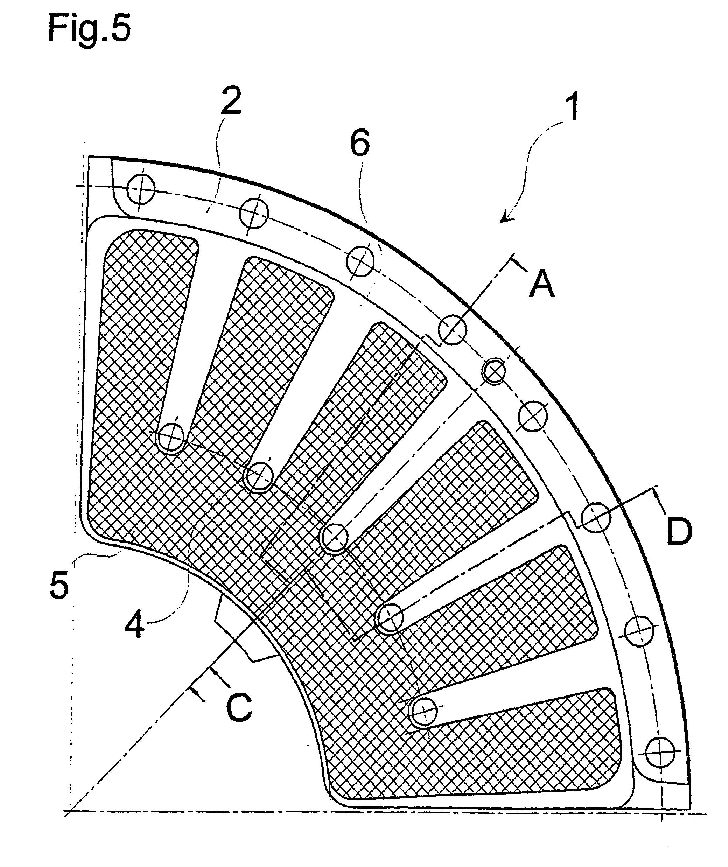

Fig. 5 zeigt einen axialen Schnitt durch das Torsionselement 1 gemäß Fig. 1 in derselben Ansicht. Daraus ergibt sich besonders deutlich die Anordnung der einzelnen Funktionselemente.

Fig. 6 zeigt eine radiale Ansicht von außen auf die Lüftungskanäle 6. Darin ist deutlich ihr ovaler, sich radial nach innen verengender Querschnitt erkennbar.

Die erfindungsgemäßen Vorteile bestehen darin, daß der Gummikörper 5 durch die erfindungsgemäß nach außen aufgebogenen bzw. aufgebördelten Ränder 2a und 3a dort eine größere aktive Vulkanisationsfläche hat, als wenn dort die Stoßkanten - wie im Stand der Technik - lediglich eben abgeschnitten wären. In diesen Bereichen wird die elastische Länge, d. h. die axiale Breite des Gummikörpers 5, ebenfalls effektiv vergrößert. Damit sinken zusätzlich die am Gummi-Metall-Übergang angreifenden relativen Beanspruchungen.

Sowohl in den radialen Stirnbereichen des Torsionselements 1 als auch in den Durchbrechungen 3 ist die Verbindung des Gummikörpers 5 mit dem Anschlußflansch-Segment 2 damit besonders hoch beanspruchbar. Die Gefahr von Ablösungen und Rißbildungen wird somit erheblich reduziert. Dies ermöglicht eine Steigerung der übertragbaren Leistungsdichte.

Für eine effektive Kühlung des Gummikörpers 5 wird dadurch gesorgt, daß aufgrund der bei Rotation auftretenden Fliehkräfte kühle Luft durch die axialen Lüftungsöffnungen 4 angesaugt und durch die radialen Lüftungskanäle 6 nach außen radial herausgeschleudert wird.

Durch die im Bereich der Durchbrechungen 3 effektiv vergrößerte elastische Länge bekommt die Wellenkupplung optimale elastische Eigenschaften.

## Patentansprüche

1. Elastische Wellenkupplung mit mindestens einem Torsionselement (1) welches als Übertragungselement mindestens einen Elastomerkörper (5) aufweist, an dem an- und abtriebsseitig axiale metallische Anschlußflansche (2) fest angebracht, vorzugsweise anvulkanisiert sind, **dadurch gekennzeichnet, daß** die Anschlußflansche (2) zumindest an den radial verlaufenden Rändern (2a, 3a) der Verbindungsfläche zwischen Elastomerkörper (5) und Anschlußflanschen (2), die an den Außenkanten von Anschlußflansch-Segmenten (2) und/oder an den Innenkanten von Durchbrechungen (3) im Anschlußflansch (2) gebildet werden, axial nach außen bezüglich des Elastomerkörpers (5) aus der Anschlußflansch-Ebene bogenförmig ausgestellt sind, und der Elastomerkörper (5) dem ausgestellten Bereich folgend anvulkanisiert ist.

2. Wellenkupplung nach Anspruch 1, **dadurch gekennzeichnet, daß** die Ränder (3a) der Durchbrechungen (3) und/oder die Ränder (2a) der Anschlußflansch-Segmente (2) Aufbördelungen aufweisen.

3. Wellenkupplung nach Anspruch 1, **dadurch gekennzeichnet, daß** entlang der Ränder (2a, 3a) ein axial über die Außenfläche des Anschlußflansches (2) vorstehender Wulst angeformt ist.

4. Wellenkupplung nach Anspruch 1, **dadurch gekennzeichnet, daß** das Torsionselement (1) axial durch die Anschlußflansche (2) und den Elastomerkörper (5) durchgehende Lüftungsöffnungen (4) aufweist.

5. Wellenkupplung nach Anspruch 4, **dadurch gekennzeichnet, daß** die Lüftungsöffnungen (4) innerhalb von Durchbrechungen (3) angeordnet sind.

6. Wellenkupplung nach Anspruch 1, **dadurch gekennzeichnet, daß** der Elastomerkörper (5) radiale Lüftungskanäle (6) aufweist.

7. Wellenkupplung nach Anspruch 6, **dadurch gekennzeichnet, daß** die radialen Lüftungskanäle (6) radial nach außen offen sind.

8. Wellenkupplung nach Ansprüchen 4 und 6, **dadurch gekennzeichnet, daß** die radialen Lüftungskanäle (6) und die axialen Lüftungsöffnungen (4) des Elastomerkörpers (5) miteinander verbunden sind.

9. Wellenkupplung nach Anspruch 5, **dadurch gekennzeichnet, daß** die Anschlußflansche (2) im Umfangsbereich zwischen den radialen Lüftungskanälen (6) Durchbrechungen (3) aufweisen.

## Claims

1. An elastic shaft coupling comprising at least one torsion element (1) which as a transmission element has at least one elastomer body (5) to which axial metallic connecting flanges (2) are fixedly attached, preferably vulcanised, at the drive input and drive output sides, **characterised in that** at least at the radially extending edges (2a, 3a) of the connecting surface between the elastomer body (5) and the connecting flanges (2) which are formed at the outside edges of connecting flange segments (2) and/or at the inside edges of openings (3) in the connecting flange (2) the connecting flanges (2) are arcuately set axially outwardly with respect to the elastomer body (5) out of the connecting flange plane and the elastomer body (5) is vulcanised thereto following the set-out region.

2. A shaft coupling according to claim 1 **characterised in that** the edges (3a) of the openings (3) and/or the edges (2a) of the connecting flange segments (2) have flanged portions.

3. A shaft coupling according to claim 1 **characterised in that** formed along the edges (2a, 3a) is a bead which projects axially beyond the outside surface of the connecting flange (2).

4. A shaft coupling according to claim I **characterised in that** the torsion element (1) has vent orifices (4) passing axially through the connecting flanges (2) and the elastomer body (5).

5. A shaft coupling according to claim 4 **characterised in that** the vent orifices (4) are arranged within openings (3).

6. A shaft coupling according to claim 1 **characterised in that** the elastomer body (5) has radial vent passages (6).

7. A shaft coupling according to claim 6 **characterised in that** the radial vent passages (6) are open radially outwardly.

8. A shaft coupling according to claims 4 and 6 **characterised in that** the radial vent passages (6) and the axial vent orifices (4) of the elastomer body (5) are connected together.

9. A shaft coupling according to claim 5 **characterised in that** the connecting flanges (2) have openings (3) in the peripheral region between the radial vent passages (6).

## Revendications

1. Accouplement souple d'arbres avec au moins un élément de torsion (1), lequel comporte comme élément de transmission au moins un corps élastomère (5), sur lequel des brides de raccordement axiales métalliques (2) solidement fixées côté entraînement et côté entraîné sont, de préférence, vulcanisées, **caractérisé en ce que** les brides de raccordement (2) au moins sur les bords (2a, 3a) de la surface de raccordement s'étendant radialement entre le corps élastomère (5) et les brides de raccordement (2) qui sont formées sur les bords extérieurs des segments des brides de raccordement (2) et/ou sur les bords intérieurs des perforations (3) dans la bride de raccordement (2), sont exposées en forme d'arc axialement vers l'extérieur par rapport au corps élastomère (5) à partir du niveau de la bride de raccordement, et le corps élastomère (5) est par la suite vulcanisé au niveau de la zone exposée.

2. Accouplement d'arbres selon la revendication 1, **caractérisé en ce que** les bords (3a) des perforations (3) et/ou les bords (2a) des segments (2) de la bride de raccordement comportent des rabattements des bords.

3. Accouplement d'arbres selon la revendication 1, **caractérisé en ce que** le long des bords (2a, 3a) des perforations un bourrelet faisant saillie axialement au-dessus de la partie extérieure de la bride de raccordement (2) est formé.

4. Accouplement d'arbres selon la revendication 1, **caractérisé en ce que** l'élément de torsion (1) comporte des prises d'air (4) traversant axialement la bride de raccordement (2) et le corps élastomère (5).

5. Accouplement d'arbres selon la revendication 4, **caractérisé en ce que** les prises d'air (4) sont disposées à l'intérieur des perforations (3).

6. Accouplement d'arbres selon la revendication 1, **caractérisé en ce que** le corps élastomère (5) comporte des canaux d'air (6) radiaux.

7. Accouplement d'arbres selon la revendication 6, **caractérisé en ce que** les canaux d'air radiaux (6) sont ouverts radialement vers l'extérieur.

8. Accouplement d'arbres selon les revendications 4 et 6, **caractérisé en ce que** les canaux d'air radiaux (6) et les prises d'air (4) du corps élastomère (5) sont reliées entre eux.

9. Accouplement d'arbres selon la revendication 5, **caractérisé en ce que** les brides de raccordement (2) comportent des perforations (3) à la zone périphérique entre les canaux d'air (6).
